# EUROPEAN PATENT SPECIFICATION

(11) **EP 2 174 036 B1**
(45) Date of publication and mention of the grant of the patent: **10.11.2010**
(21) Application number: 08790087.4
(22) Date of filing: 31.07.2008
(51) Int. Cl.: F16D 65/18

(54) **BRAKE CALIPER PARKING DEVICE**
BREMSSATTELPARKVORRICHTUNG
DISPOSITIF DE STATIONNEMENT D'ÉTRIER DE FREIN

(30) Priority: 02.08.2007 IT MI20071596
(43) Date of publication of application: 14.04.2010
(73) Proprietor: Freni Brembo S.p.A., 24035 Curno (Bergamo) (IT)
(72) Inventor: CANOVA, Walter, I-24010 Sorisole Bergamo (IT); TERUZZI, Andrea, I-24061 Albano S. Alessandro Bergamo (IT); RENZI, Davide, I-23841 Annone Brianza Lecco (IT)
(74) Representative: Crippa, Paolo Ernesto
(86) International application number: PCT/IT2008/000520
(87) International publication number: WO 2009/016680

(56) References cited:
- DE-U1- 8 900 277
- FR-A- 2 820 793
- US-A1- 2004 245 055

## Description

The object of the present invention is a brake caliper parking device for a vehicle disc brake.

Known brake calipers provided with parking systems comprise an actuating lever that can be manually operated by the vehicle driver and that is usually connected to the hand-brake lever by means of one or more cables. The actuating lever is connected to a driving shaft that is associated with a main plate carrying shaped seats that are suitable to at least partially accommodate balls and allow the latter to roll therein.

These brake calipers further comprise a reaction plate that is at least rotatably integrally connected to a caliper body of the brake caliper and that is suitable to co-operate with the main plate. The reaction plate, in fact, also has shaped seats which are suitable to accommodate said balls and allow the latter to roll therein. The main plate and the reaction plate are positioned such that their respective ball seats are arranged opposite to each other and thus the balls may simultaneously roll within the seats of both of them. The seats of the main plate and reaction plate are shaped such that, after the rotation of the main plate, they follow such a pathway as to move the main plate and reaction plate away from each other. Thereby, when the actuating lever is operated, the main plate, which is connected to the latter by means of the driving shaft, rotatably translates away from the reaction plate.

The main plate is operatively connected to a piston that is suitable to slide relative to the caliper body such that the rotational translation of the main plate causes the piston to translate within the caliper body. When the piston is translating, it pushes on a pad against a disc of the disc brake, thus tightening the latter and providing the parking braking action.

In order to ensure a proper operation of the above-described mechanism, it is important that the reaction plate and the caliper body are rotatably integrally, preferably also translatably, connected to each other. To this aim, locking pins associated with the reaction plate are provided in known caliper brakes, which are suitable to fit within matching holes in the caliper body, such as to prevent the relative rotation of the same. These locking pins can be either made as one piece with the reaction plate or can be removable and fittable within through holes in the reaction plate matching the holes made in the caliper body. In order to constrain the reaction plate and caliper body relative to the translation, these locking pins can be for example either pressure-fitted within the caliper body holes, or they can be screwed therein. Such a caliper is for instance known from US 2004/245055.

The brake calipers described above suffer, however, from the drawback of requiring a number of machining operations, both on the reaction plate (e.g., machining the through holes for the locking pins), and on the caliper body (e.g., the holes suitable to accommodate the locking pins), which are required to provide the rotational and translational integral connection thereof. This entails a high amount of cost and time for processing, besides a long assembly time due to the complexity of this system.

The object of the present invention is therefore to provide a brake caliper provided with a parking system in which the amount of machining required for proper assembly can be reduced, with consequent advantage in terms of total time and cost for processing, and which is also simple and fast to assemble.

These and other objects are achieved by means of a parking device of a brake caliper according to claim 1, a brake caliper according to claim 27 and a disc brake according to claim 28. Each dependent claim defines a possible embodiment of the parking device, brake caliper, or disc brake.

For a better understanding of the invention and in order to appreciate the advantages thereof, several nonlimiting exemplary embodiments will be described herein below, with reference to the annexed drawings, in which:
Fig. 1 is a perspective schematic cut-away view of a brake caliper provided with a parking device according to the invention;
Fig. 2 is a perspective, partially sectioned, schematic view of the brake caliper in Fig. 1;
Fig. 3 is a schematic sectional view of the brake caliper in Fig. 1;
Fig. 4 is a schematic perspective view of a component of the brake caliper in Fig. 1;
Fig. 5 is a schematic view according to arrow L of the brake caliper component in Fig. 4;
Fig. 6 is a further schematic view according to arrow H of the brake caliper component in Fig. 4;
Fig. 7 is a partial schematic enlarged view of the portion highlighted by means of a circle A of the brake caliper component in Fig. 4;
Fig. 8 is a further schematic view according to arrow G of the brake caliper component in Fig. 4.

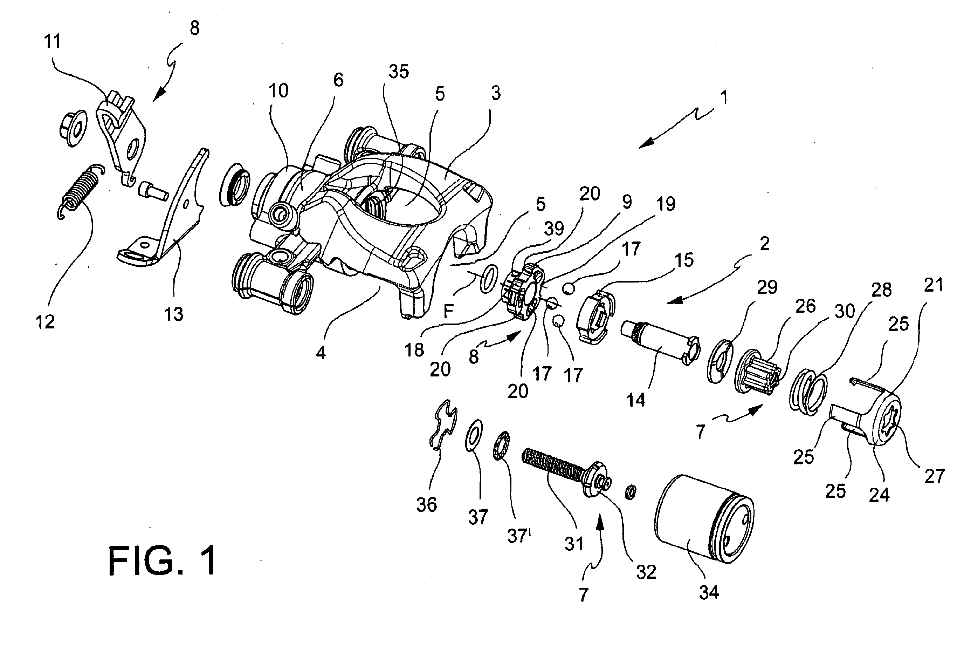

With reference to Fig. 1-3, a brake caliper for a vehicle disc brake is generally designated with 1. The brake caliper 1, preferably though not necessarily of the floating type, comprises a parking device 2 suitable to provide a parking braking action of the vehicle that can be controlled by the vehicle driver, such as by acting on the so-called hand brake. Preferably, the caliper 1 is configured such as to be capable of carrying out, in addition to the parking braking action, also the service braking action, i.e. the braking action that is applied to the vehicle in motion, such as by acting on the brake pedal.

The brake caliper 1 comprises a caliper body 3 which defines a disc space 4 suitable to at least partially accommodate a brake disc (not shown in the drawings) which is associated with a vehicle wheel. On at least one, preferably on both sides of the disc space 4, the caliper body 3 defines pad seats 5 which are suitable to accommodate one or more pads (not shown in the drawings) that are suitable to engage the brake disc, by tightening the latter and thereby providing the braking action.

The parking device 2 comprises a main support body 6 which is preferably made as one piece with the caliper body 3, although it may alternatively be distinct from the latter and connectable thereto.

The parking device 2 comprises thrust means 7 that are suitable to exert a thrust action on at least one of the pads 1 of the caliper such that the latter engages the brake disc.

The parking device 2 further comprises actuating means 8 that are suitable to operate the thrust means 7 such that the latter exert the above-mentioned thrust action on the pad, and a reaction element 9 which is connected or can be connected to the support main body 6 of the actuating device 2 at a support portion 10 thereof. This reaction element 9 is suitable to co-operate with the actuating means 8 such that the latter can carry out the actuation of the thrust means 7. The modes of the co-operation between the reaction element 9 and the thrust means 7 will be detailed herein below.

In accordance with an embodiment, the actuating means 8 of the parking device 2 comprise an actuating lever 11 that can be connected for example to a hand brake lever within the vehicle (not shown in the drawings). The actuating lever 11 is connected to the main support body 6 such as to be capable of performing rotations and, preferably, small translations, relative thereto. The actuating lever 11 can move from a rest position, which corresponds to the hand brake lowered position (absence of parking braking action), to a work position, which corresponds to the hand brake raised position (presence of the parking braking action). To the actuating lever 11 can be connected a return spring 12 which is suitable to elastically bias the actuating lever to the rest position. This return spring 12 acts between the actuating lever 11 and the main support body 6 or a device portion integral thereto, for example a counter-element 13 that is removably connected to the main support body 6.

To the actuating lever 11 there is advantageously rotatably integrally connected a driving shaft 14, which supports at the one end thereof a main plate 15. This main plate 15 comprises rolling seats 16 that are suitable to at least partially accommodate revolving bodies, preferably balls, 17 and cause the latter to roll therein.

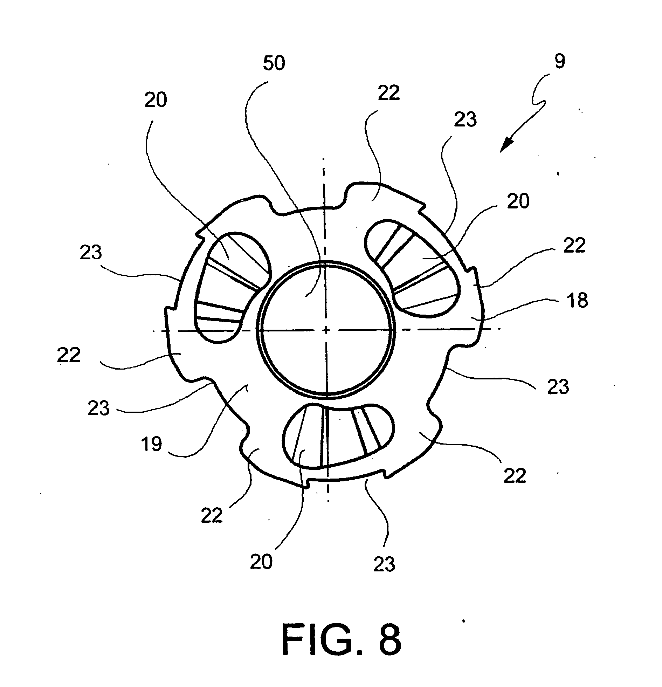

According to an embodiment, the reaction element 9 comprises a reaction plate 18 facing the main plate 15. Advantageously, the reaction plate 18 comprises a co-operation surface 19, which comprises, in turn, rolling seats 20 that are suitable to at least partially accommodate the balls 17 and allow the latter to roll within the rolling seats 20 (in this regard, see also Fig. 8). The balls 17 are thus interposed between the main plate 15 and the reaction plate 18 and are simultaneously accommodated within their respective rolling seats 16 and 20. With further advantage, the rolling seats 16 of the main plate 15 and the rolling seats 20 of the reaction plate 18 are shaped such that when the balls 17, interposed between the plates 15 and 18, simultaneously roll within these rolling seats 16 and 20, the main plate 15 and the reaction plate 18 are biased away from each other. This rolling movement is triggered by the rotation of the main plate 15, which is in turn operated by the actuating lever 11 by means of the driving shaft 14. Consequently, the driving shaft 14 - main plate 15 assembly is rotationally translated relative to the reaction element 9, which is connected to the main support body 6.

In accordance with an embodiment, the reaction plate 18 of the reaction element 9 forms means for the connection to a support device 21 that is suitable to support the thrust means 7. For example, the reaction plate 18 may form radially projecting portions 22 defining connecting seats 23 therebetween for connecting the reaction element 9 to the support device 21, for example with elastic legs 25 of a cage 24, that can be snap-connected to the reaction plate 18. Thereby, the cage 24 and the reaction element 9 result rotatably and translatably integrally connected with each other.

Advantageously, the cage 24 supports a thrust shaft 26 that is operatively connected to the main plate 15. This thrust shaft 26 is free to slide relative to the cage 24 and is preferably rotatably integral therewith. To the purpose, the cage 24 defines a shaft seat 27 having a contour substantially complementary with the contour of the thrust shaft 26, for example a contour provided with a plurality of lobes, which is suitable to provide a shape coupling between the thrust shaft 26 and the cage 24. Between the cage 24 and the thrust shaft 26 a counter-spring 28 can act, which is arranged such as to elastically bias the thrust shaft 26 to the main plate 15.

As may be understood by those skilled in the art, the rotational translation of the main plate 15, which has been triggered in the manner described above by the rotation of the actuating lever 11, results in a translation of the thrust shaft 26, which translates away from the reaction element 9, i.e. towards the disc space 4.

In order to reduce the frictional torques due to the relative rotations between the main plate 15 and the thrust shaft 26, anti-friction means may be arranged between the latter, for example a Teflon-coated fifth wheel 29.

In accordance with a possible embodiment, the thrust shaft 26 defines a threaded seat 30 suitable to accommodate a threaded pin 31. At the end of the threaded pin 31 facing the disc space 4, a thrust head 32 can be provided, preferably a truncated-cone shaped one, which is suitable to abut against a corresponding head seat 33 of a piston 34 that is free to slide within a piston seat 35 being defined by the main support body 6. The thrust head 32 is advantageously held pressed within the head seat 33 by a thrust spring 36 acting between the thrust head 32 and the piston. Due to this configuration, the translation of the thrust shaft 26 results in a translation of the piston 34, to which at least one of the above-mentioned pads is operatively connected, which is thereby biased against the brake disc accommodated within the disc space 4.

The threaded pin 31 has the advantageous function of recovering the clearance due to the pad wear, which are compensated by rotations thereof within the threaded seat 30 of the thrust shaft 26. Consequently, the thrust head 32 can rotate relative to the thrust spring 36 and piston 34.

According to a possible embodiment, in order to limit the frictional torques due to the relative rotations between the thrust spring 36 and the thrust head 32, anti-friction means are interposed between the latter, for example a plate 37 and/or a bearing 37'.

Advantageously, the piston 34 defines a cavity 38 therein. This cavity 38, besides at least partially accommodating the thrust means 7, is suitable to be filled with pressurized fluid, such that the piston 34 may be also hydraulically actuated, i.e. for the service braking, which can be actuated for example by pressing on the brake pedal.

In order to ensure a proper operation of the parking device 2, the reaction element 9 is required to be rotatably and translatably connected to the main support body 6.

To this purpose, the reaction element 9 advantageously comprises one or more deforming elements 39 which are suitable to interact with the support portion 10 of the main support body 6, such that the latter is deformed to provide corresponding retracted seats that are intended to at least partially hold the deforming elements 39, such as to provide the rotational and translational integral connection of the reaction element 9 to the main support body 6. With further advantage, the deforming element 39 are configured such as to deform the support portion 10 of the main support body 6 after the reaction element 9 has been forcibly pressed, for example by means of a press, against this main support body 6.

The provision of the deforming elements 39 allows rotatably and translatably integrally connecting the reaction element 9 and main support body 6 directly to each other, without additional components, such as pins, screws, or the like, being required, and thus without requiring special machining on these additional connection elements, such as holes, threaded seats, or the like. Consequently, the time and cost for processing the parking device 2 and caliper 1 result to be reduced. Furthermore, since the connection between the main support body 6 and reaction element 9 can take place by simply forcibly pressing the latter against the former, the total time for assembling the parking device 2 and brake caliper 1 result to be reduced.

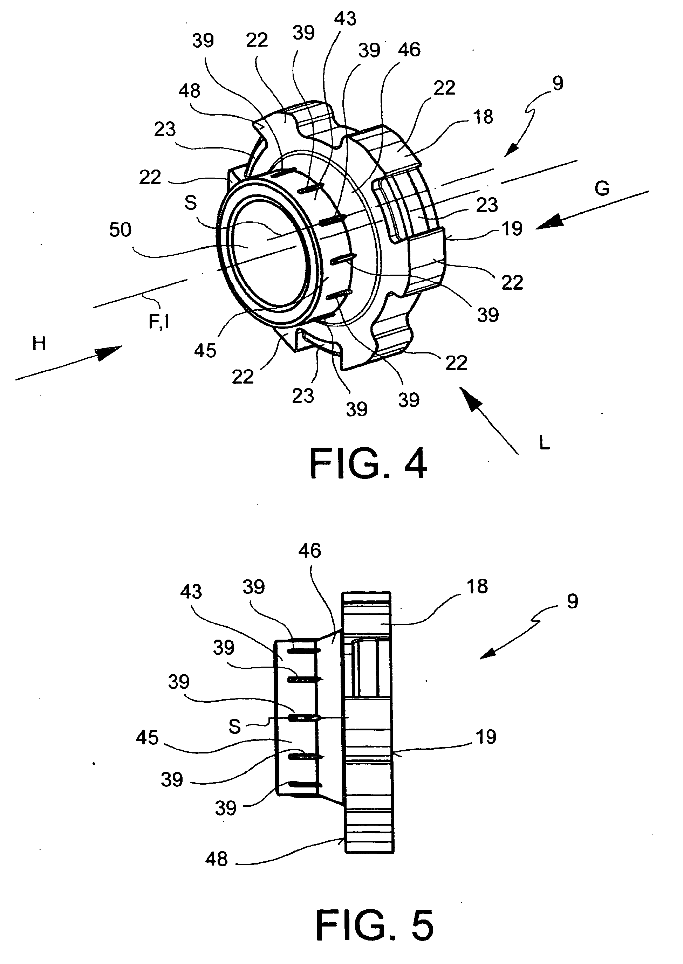

Advantageously, the deforming elements 30 develop in a preferably rectilinear development direction S of the deforming elements 39. With further advantage, the forcing action by the reaction element 9 against the main support body 6 takes place in a forcing direction F which is preferably parallel to the development direction S of the deforming elements 39 (Fig. 4 and 5). Still more preferably, the development direction S of the deforming elements 39 is parallel to the relative translation direction of the driving shaft 14 - main plate 15 assembly relative to the reaction unit 9.

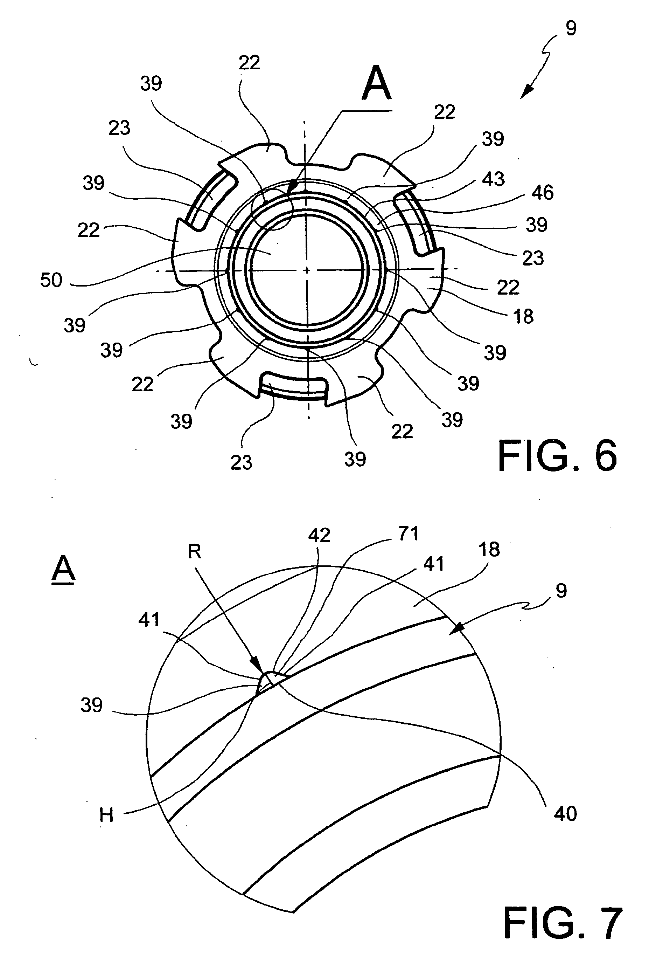

In accordance with an embodiment, the deforming elements have a substantially triangular shape (Fig. 6 and 7), cross-sectionally to their development direction S.

According to a possible embodiment, this triangle has a base side 40, supported by the reaction element 9, and two free sides 41 which have the function of constraining the deforming elements 39 within the respective retracted seats, and consequently the reaction element 9 relative to the main support body 6 after the forcing action has been performed. Particularly, the triangle provides a shape-connection with the retracted seats which are, by being deformed by the deforming elements 39, substantially complementary therewith. Furthermore, the free sides 41 of the sectional triangle of the deforming elements 39 are suitable to generate frictional forces with the walls of the retracted seats, thereby preventing the deforming elements 30 from slipping off the retracted seats. Thereby, the reaction element 9 results to be fastened to the main support body 6 both upon translation (friction of free sides 41), and rotation (shape-coupling between the deforming elements 39 and retracted seats).

Advantageously, the sectional triangle of the deforming elements 39 comprises a free edge 42 arranged between the free sides 41, which further advantageously has at least one substantially constant bending radius R, preferably only one bending radius R. This free edge 42 is preferably opposite the base side 40 and forms a triangle height H therewith.

In order to optimize the deformation performance on the support portion 10 by the deforming elements 39, the latter have preferred size ratios. According to a possible embodiment, the bending radius R of the free edge 42 is dimensionally lower than the height H of the sectional triangle of the deforming elements 39. Preferably, the ratio of the bending radius R to height H is about 2:3.

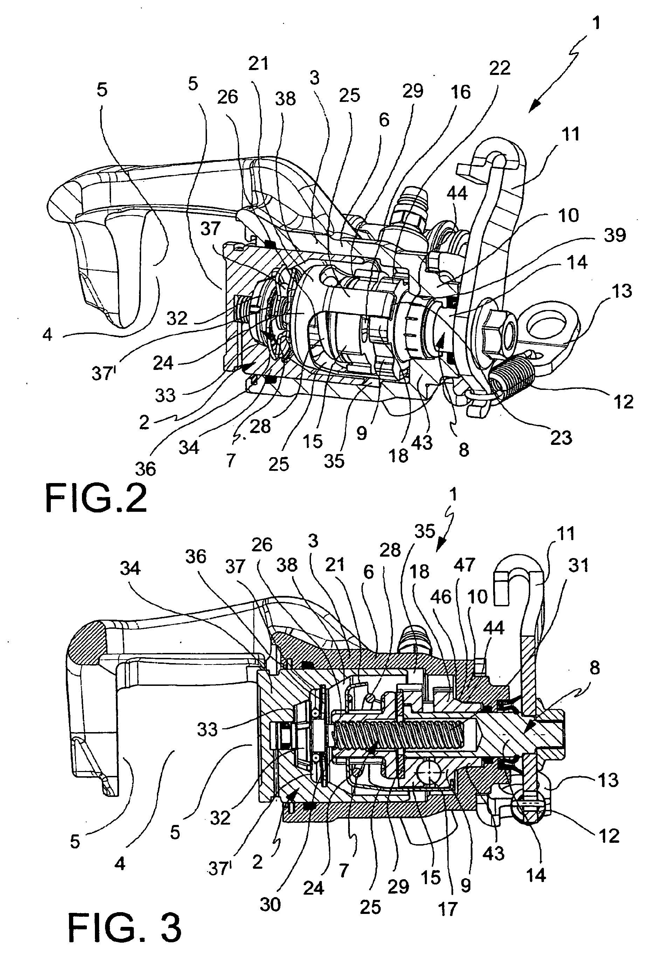

Advantageously, the reaction element 9 comprises a preferably cylinder-shaped fitting portion 43 extending in a development direction I of the fitting portion, which is suitable to be fitted within a corresponding locking seat 44 defined by the support portion 6 (Fig. 2-5). Preferably, the locking seat 44 is co-axial with the driving shaft 14. The coupling between the fitting portion 43 and the locking seat 44 allows a proper relative centering between the reaction element 9 and the main support body 6 during the mounting operation, particularly during the forcing operation in the forcing direction F.

In accordance with an embodiment, the fitting portion 43 of the reaction element 9 supports the deforming elements 39. These deforming elements 39, particularly, are advantageously spaced radially projecting along the fitting portion 43, preferably arranged parallel to each other, and most preferably, parallel to the development direction I of the fitting portion 43. Furthermore, the deforming elements 39 are preferably arranged angularly equally-spaced from each other within the locking seat 44 of the main support body 6.

In accordance with an embodiment, the deforming elements 39 develop along lengths of the development directions S thereof having a lower extension than that of the fitting portion 43 in the development direction 6 thereof. Particularly, the fitting portion 43 is advantageously not provided with the deforming elements 39 at the one end thereof 45 being intended to face the locking seat 44. Thereby, during the assembly operations, the reaction element 9 can be first centered relative to the main support body 6 due to the fitting portion 43 being fitted within the locking seat 44, and then the fitting portion 43 can be forced within the locking seat 44 such that the deforming elements 39 deform the locking seat 44 thereby forming the retracted seats.

According to a possible embodiment, the section of the deforming elements 39 that is intended to first interact with the support portion 10 to provide the retracted seats, particularly during the forcing action by the reaction element 9 against the support portion 10 of the main support body 6, is sloped relative to a plane orthogonal to the development direction S of the deforming elements 39. Thereby, the retracted seats can be formed by the deforming elements 39 in a gradual manner. Advantageously, the reaction element 9 comprises a friction portion 46 suitable to abut against a corresponding friction portion 47 of the locking seat 44 of the main support body 6 (Fig. 3-6). Thereby the relative rotation between the reaction element 9 and the main support body 6 are further constrained by the frictional contact between the friction portions 46 an 47 of the reaction element 9 and the locking seat 44, respectively. According to a possible embodiment, these friction portions 46 and 47 are substantially complementary to each other. Preferably, the friction portions 46 and 47 are substantially truncated cone-shaped. According to an embodiment, the friction portion 46 of the reaction element 9 is arranged between the fitting portion 43 and the above-described reaction plate 18.

Advantageously, the reaction element 9 defines a through opening 50 that is suitable to at least partially support the actuating means 8. Particularly, the through opening 50 can support the actuating shaft 14, and by means of the latter, the actuating means 8. Preferably, the through opening 50 is co-axial with the driving shaft 14 and locking seat 44 of the support portion 10.

Preferably, the reaction element 9, as well as the main plate 15 are made of sintered steel.

From the description provided above, those skilled in the art may appreciate how the parking device according to the invention resolves at least several of the problems cited with reference to the prior art.

Particularly, those skilled in the art may appreciate how, due to the provision of the deforming elements allows connecting the reaction element and support main body with each other without requiring to provide auxiliary components, such as pins, screws or the like. Consequently, the number of operations and the total time required for machining the parking device and caliper break are reduced.

Those skilled in the art may also appreciate how the operations for assembling the reaction element to the main support body are easy and thus fast to carry out, since they can be performed by forcibly pressing them against each other. The total time required for assembling the parking device and caliper brake are consequently reduced.

According to a preferred embodiment, said deforming elements 39 are configured such as to deform said support portion 10 of the main support body 6 after said reaction element 9 has been forcibly pressed against said main support body 6.

According to a preferred embodiment, the ratio of said bending radius R of the free edge 42 to said height H of the triangle is about 2:3.

To the above-described embodiments of the parking device, brake caliper and disc brake according to the invention, those skilled in the art, aiming at meeting specific contingent requirements, may carry out a number of variations, modifications, or replacements of elements with functionally equivalent ones, without however departing from the scope of the following claims.

## Claims

1. A parking device (2) of a brake caliper (1) for a disc brake of a vehicle, comprising:
- a main support body (6);
- thrust means (7) which are suitable to exert a thrust action on at least one pad such that the latter engages a brake disc of the disc brake associated with a wheel of said vehicle, thereby tightening the latter;
- actuating means (8) suitable to actuate said thrust means (7) such that these exert said thrust action on the pad;
- a reaction element (9) that is or can be connected to said main support body (6) at a support portion (10) thereof and suitable to co-operate with said actuating means (8) such that the latter carry out said actuation of the thrust means (7),
**characterized in that** said reaction element (9) comprises one or more deforming elements (39) that are suitable to interact with said support portion (10) of the main support body (6), by deforming the latter such as to form corresponding retracted seats that are intended to at least partially hold the deforming elements (39), such that a rotational and translational integral connection is provided between said reaction element (9) and said main support body (6).

2. The device (2) according to the preceding claim, wherein each of said deforming elements (39) develops in a development direction (S) of the deforming elements (39) and said development direction (S) of the deforming elements (39) is rectilinear.

3. The device (2) according to claim 2, wherein said forcing action of the reaction element (9) against said main support body (6) is carried out in a forcing direction (F) parallel to said development direction (S) of the deforming elements (39).

4. The device (2) according to any claim from 2 to 3, wherein said deforming elements (39), transversally to said development direction (S) of the deforming elements (39), have a substantially triangular section.

5. The device (2) according to the preceding claim, wherein said triangle comprises a base side (40) supported by said reaction element (9) and two free sides (41).

6. The device (2) according to the preceding claim, wherein said triangle comprises a projecting free edge (42) arranged between said free sides (41) which forms a height (H) of said triangle with said base side (40).

7. The device (2) according to the preceding claim, wherein said free edge (42) has at least one bending radius (R) and said bending radius (R) is substantially constant.

8. The device (2) according to claim 7, wherein said bending radius (R) of the free edge (42) is lower than said height (H) of the triangle.

9. The device (2) according to any preceding claim, wherein said reaction element (9) comprises a fitting portion (43) that is suitable to be fitted within a corresponding locking seat (44) defined by said support portion (10) of the main support body (6) and said fitting portion (43) of the reaction element (9) supports said deforming elements (39).

10. The device (2) according to claim 9, wherein said deforming elements (39) are spaced along the perimeter of said fitting portion (43).

11. The device (2) according to claim 9 or 10, wherein said fitting portion (43) is substantially cylinder-shaped, said cylinder extending in a development direction (I) of the fitting portion (43) and said development direction (I) of the fitting portion (43) is substantially parallel to said development directions (S) of the deforming elements (39).

12. The device (2) according to claim 11, wherein said deforming elements (39) develop along lengths of the development directions (S) of the deforming elements (39) having a lower extension than the extension of said fitting portion (43) in said development direction (I) of the fitting portion (43).

13. The device (2) according to anyone of the claims from 9 to 12, wherein said deforming elements (39) radially project from said fitting portions (43).

14. The device (2) according to anyone of the claims from 9 to 13, wherein said deforming elements (39) are arranged substantially parallel to each other on said fitting portion (43).

15. The device (2) according to anyone of the claims from 9 to 14, wherein said deforming elements (39) are angularly arranged substantially equally spaced from each other on said fitting portion (43).

16. The device (2) according to anyone of the claims from 9 to 15, wherein said fitting portion (43) is not provided with said deforming elements (39) at an end (45) thereof facing said locking seat (44).

17. The device (2) according to any of claims 9 to 16, wherein said reaction element (9) comprises a friction portion (46) suitable to abut against a corresponding friction portion (47) of said locking seat (44) of the main support body (6), such as to constraining the relative rotations between said reaction element (9) and said main support body (6) by means of friction.

18. The device (2) according to the preceding claim,
wherein said friction portions (46, 47) of the reaction element (9) and locking seat (44) are substantially complementary with each other.

19. The device (2) according to claim 17 or 18, wherein said friction portions (46, 47) of the reaction element (9) and locking seat (44) are substantially truncated cone-shaped.

20. The device (2) according to any preceding claim, wherein said reaction element (9) comprises a reaction plate (18) suitable to co-operate with said actuating means (8) and said reaction plate (18) comprises a co-operation surface (19) that comprises one or more rolling seats (20) which are suitable to at least partially accommodating revolving bodies (17) suitable to roll within said rolling seats (20), said revolving bodies (17) providing said co-operation between the reaction element (9) and said actuating means (8).

21. The device (2) according to claim 20, wherein said actuating means (8) comprise a main plate (15) suitable to co-operate with said reaction plate (18), said main plate (15) comprising rolling seats (16) corresponding to said rolling seats (20) of the reaction plate (18), said rolling seats (16) of the main plate (15) being suitable to at least partially accommodate and roll the revolving bodies (17) that are accommodated and rolling within said rolling seats (20) of the reaction plate (18), such as to provide said co-operation between said reaction plate (18) and said main plate (15).

22. The device (2) according to the preceding claim, wherein said actuating means (8) comprise an actuating shaft (14) associated with said main plate (15).

23. The device (2) according to the preceding claim, wherein said reaction element (9) defines a through opening (50) that is suitable to at least partially support said actuating shaft (14).

24. The device (2) according to any of the claim from 20 to 23, wherein said reaction plate (18) forms projecting elements (22) defining connection seats (23) between each other to connect said reaction element (9) with a support device (21) suitable to support said thrust means (7).

25. The device (2) according to any preceding claim, wherein said reaction element (9) is made of sintered steel.

26. The device (2) according to any of the claim from 2 to 25, wherein the end section of the deforming elements (39) that is intended to first interact with said support portion (10) of the main support body (6) to form said retracted seats is sloped relative to a plane orthogonal to said development direction (S) of the deforming elements (39).

27. A brake caliper (1) comprising a parking device (2) according to any preceding claim, for example of the floating type.

28. A disc brake comprising a brake caliper (1) according to claim 27.

## Patentansprüche

1. Feststellvorrichtung (2) eines Bremssattels (1) für eine Scheibenbremse eines Fahrzeugs, die umfasst.
- ein Haupt-Tragekörper (6);
- eine Druckeinrichtung (7), die sich dazu eignet, eine Druckwirkung auf wenigstens einen Bremsbelag auszuüben, so dass letzterer mit einer Bremsscheibe der Scheibenbremse in Eingriff kommt, die mit einem Rad des Fahrzeugs verbunden ist, um letztere anzuziehen,
- eine Betätigungseinrichtung (8), die sich dazu eignet, die Druckeinrichtung (7) so zu betätigen, dass diese die Druckwirkung auf den Bremsbelag ausübt;
- ein Gegenwirkungselement (9), das mit dem Haupt-Tragekörper (6) an einem Trageabschnitt (10) desselben verbunden ist oder damit verbunden werden kann, und das sich dazu eignet, mit der Betätigungseinrichtung (8) so zusammenzuwirken, dass letztere die Betätigung der Druckeinrichtung (7) ausführen kann,
**dadurch gekennzeichnet, dass** das Gegenwirkungselement (9) ein oder mehrere Verformungselement/e (39) umfasst, das/die sich dazu eignet/eignen, in Wechselwirkung mit dem Trageabschnitt (10) des Haupt-Tragekörpers (6) zu treten, indem es/sie letztere so verformt/verformen, dass entsprechende vertiefte Aufnahmen ausgebildet werden, die dazu dienen, die Verformungselemente (39) wenigstens teilweise aufzunehmen, so dass eine integrale Dreh- und Verschiebeverbindung zwischen dem Gegenwirkungselement (9) und dem Haupt-Tragekörper (6) geschaffen wird.

2. Vorrichtung (2) nach dem vorangehenden Anspruch, wobei jedes der Verformungselemente (39) in einer Verlaufsrichtung (S) der Verformungselemente (39) verläuft und die Verlaufsrichtung (S) der Verformungselemente (39) geradlinig ist.

3. Vorrichtung (2) nach Anspruch 2, wobei die Drückwirkung des Gegenwirkungselementes (9) auf den Haupt-Tragekörper (6) in einer Drückrichtung (F) parallel zu der Verlaufsrichtung (S) der Verformungselemente (39) ausgeübt wird.

4. Vorrichtung (2) nach einem der Ansprüche von 2 bis 3, wobei die Verformungselemente (39) quer zu der Verlaufsrichtung (S) der Verformungselemente (39) einen im Wesentlichen dreieckigen Querschnitt haben.

5. Vorrichtung (2) nach dem vorangehenden Anspruch, wobei das Dreieck eine Basis-Seite (40), die von dem Gegenwirkungselement (9) getragen wird, und zwei freie Seiten (41) umfasst.

6. Vorrichtung (2) nach dem vorangehenden Anspruch, wobei das Dreieck eine vorstehende freie Kante (42) umfasst, die zwischen den freien Seiten (41) angeordnet ist und mit der Basis-Seite (40) eine Höhe (H) des Dreiecks bildet.

7. Vorrichtung (2) nach dem vorangehenden Anspruch, wobei die freie Kante (42) wenigstens einen Biegeradius (R) hat und der Biegeradius (R) im Wesentlichen konstant ist.

8. Vorrichtung (2) nach Anspruch 7, wobei der Biegeradius (R) der freien Kante (42) kleiner ist als die Höhe (H) des Dreiecks.

9. Vorrichtung (2) nach einem der vorangehenden Ansprüche, wobei das Gegenwirkungselement (9) einen Passabschnitt (43) umfasst, der im Wesentlichen zum Einpassen in eine entsprechende Arretieraufnahme (44) geeignet ist, die durch den Trageabschnitt (10) des Haupt-Tragekörpers (6) gebildet wird, und der Passabschnitt (43) des Gegenwirkungselementes (9) die Verformungselemente (39) trägt.

10. Vorrichtung (2) nach Anspruch 9, wobei die Verformungselemente (39) am Umfang des Passabschnitts (43) entlang beabstandet sind.

11. Vorrichtung (2) nach Anspruch 9 oder 10, wobei der Passabschnitt (43) im Wesentlichen zylindrisch geformt ist, sich der Zylinder in einer Verlaufsrichtung (I) des Passabschnitts (43) erstreckt und die Verlaufsrichtung (I) des Passabschnitts (43) im Wesentlichen parallel zu den Verlaufsrichtungen (S) der Verformungselemente (39) ist.

12. Vorrichtung (2) nach Anspruch 11, wobei die Verformungselemente (39) entlang der Längsausdehnungen der Verlaufsrichtungen (S) der Verformungselemente (39) verlaufen, die eine kürzere Ausdehnung haben als die Ausdehnung des Passabschnitts (43) in der Verlaufsrichtung (1) des Passabschnitts (43).

13. Vorrichtung (2) nach einem der Ansprüche von 9 bis 12, wobei die Verformungselemente (39) radial von den Passabschnitten (43) vorstehen.

14. Vorrichtung (2) nach einem der Ansprüche von 9 bis 13, wobei die Verformungselemente (39) im Wesentlichen parallel zueinander an dem Passabschnitt (43) angeordnet sind.

15. Vorrichtung (2) nach einem der Ansprüche von 9 bis 14, wobei die Verformungselemente (39) winklig im Wesentlichen gleichmäßig voneinander beabstandet an dem Passabschnitt (43) angeordnet sind.

16. Vorrichtung (2) nach einem der Ansprüche von 9 bis 15, wobei der Passabschnitt (43) an einem Ende (45) desselben, das der Arretieraufnahme (44) zugewandt ist, nicht mit den Verformungselementen (39) versehen ist.

17. Vorrichtung (2) nach einem der Ansprüche 9 bis 16, wobei das Gegenwirkungselement (9) einen Reibungsabschnitt (46) umfasst, der zum Anlegen an einem entsprechenden Reibungsabschnitt (47) der Arretieraufnahme (44) des Haupt-Tragekörpers (6) geeignet ist, so dass die relativen Drehungen des Gegenwirkungselementes (9) und des Haupt-Tragekörpers (46) zueinander mittels Reibung eingeschränkt werden.

18. Vorrichtung (2) nach dem vorangehenden Anspruch, wobei die Reibungsabschnitte (46, 47) des Gegenwirkungselementes (9) und der Arretieraufnahme (44) im Wesentlichen komplementär zueinander sind.

19. Vorrichtung (2) nach Anspruch 17 oder 18, wobei die Reibungsabschnitte (46, 47) des Gegenwirkungselementes (9) und der Arretieraufnahme (44) im Wesentlichen kegelstumpfförmig sind.

20. Vorrichtung (2) nach einem der vorangehenden Ansprüche, wobei das Gegenwirkungselement (9) eine Gegenwirkungsplatte (18) umfasst, die sich dazu eignet, mit der Betätigungseinrichtung (8) zusammenzuwirken, und die Gegenwirkungsplatte (18) eine Zusammenwirkungsfläche (19) umfasst, die eine oder mehrere Rollaufnahmen (20) umfasst, die sich dazu eignet/eignen, Drehkörper (17) wenigstens teilweise aufzunehmen, die zum Rollen in den Rollaufnahmen (20) geeignet sind, und die Drehkörper (17) das Zusammenwirken zwischen dem Gegenwirkungselement (9) und der Betätigungseinrichtung (8) ermöglichen.

21. Vorrichtung (2) nach Anspruch 20, wobei die Betätigungseinrichtung (8) eine Hauptplatte (15) umfasst, die zum Zusammenwirken mit der Gegenwirkungsplatte (18) geeignet ist, die Hauptplatte (15) Rollaufnahmen (16) umfasst, die den Rollaufnahmen (20) der Gegenwirkungsplatte (18) entsprechen, sich die Rollaufnahmen (16) der Hauptplatte (15) dazu eignen, die Drehkörper (17), die in den Rollaufnahmen (20) der Gegenwirkungsplatte (18) aufgenommen sind und darin rollen, wenigstens teilweise aufzunehmen und zu rollen, um das Zusammenwirken zwischen der Gegenwirkungsplatte (18) und der Hauptplatte (15) zu ermöglichen.

22. Vorrichtung (2) nach dem vorangehenden Anspruch, wobei die Betätigungseinrichtung (8) eine Betätigungswelle (14) umfasst, die mit der Hauptplatte (15) verbunden ist.

23. Vorrichtung (2) nach dem vorangehenden Anspruch, wobei das Gegenwirkungselement (9) eine Durchgangsöffnung (50) aufweist, die sich dazu eignet, die Betätigungswelle (14) wenigstens teilweise zu tragen.

24. Vorrichtung (2) nach einem der Ansprüche 20 bis 23, wobei die Gegenwirkungsplatte (18) vorstehende Elemente (22) aufweist, die Verbindungsaufnahmen (23) zwischen einander bilden, um das Gegenwirkungselement (9) mit einer Tragevorrichtung (21) zu verbinden, die zum Tragen der Druckeinrichtung (7) geeignet ist.

25. Vorrichtung (2) nach einem der vorangehenden Ansprüche, wobei das Gegenwirkungselement (9) aus gesintertem Stahl besteht.

26. Vorrichtung (2) nach einem der Ansprüche von 2 bis 25, wobei der Endabschnitt der Verformungselemente (39), der dazu bestimmt ist, zuerst mit dem Trageabschnitt (10) des Haupt-Tragekörpers (6) in Wechselwirkung zu treten, um die vertieften Aufnahmen zu bilden, relativ zu einer Ebene senkrecht zu der Verlaufsrichtung (S) der Verformungselemente (39) geneigt ist.

27. Bremssattel (1), beispielsweise vom schwimmenden Typ der eine Feststellvorrichtung (2) nach einem der vorangehenden Ansprüche umfasst.

28. Scheibenbremse, die einen Bremssattel (1) nach Anspruch 27 umfasst.

## Revendications

1. Dispositif de stationnement (2) d'un étrier de frein (1) pour frein à disque de véhicule, comprenant :
- un corps de support principal (6) ;
- des moyens de poussée (7) qui sont aptes à exercer une action de poussée sur au moins une plaquette de manière que la plaquette engage un disque de frein du frein à disque associé à une roue dudit véhicule, ce qui la serre ;
- des moyens d'actionnement (8) aptes à actionner lesdits moyens de poussée (7) de manière qu'ils exercent ladite action de poussée sur la plaquette ;
- un élément de réaction (9) qui est, ou peut être, relié audit corps de support principal (6) en une partie de support (10) de celui-ci et apte à coopérer avec lesdits moyens d'actionnement (8) de manière que ceux-ci réalisent ledit actionnement des moyens de poussée (7),
**caractérisé en que** ledit élément de réaction (9) comprend un ou plusieurs éléments de déformation (39) qui sont aptes à entrer en interaction avec ladite partie de support (10) du corps de support principal (6), en déformant celle-ci de manière à former des sièges rétractés correspondants qui sont destinés, au moins en partie, à tenir les éléments de déformation (39), de manière qu'une connexion intégrale en rotation et en translation soit créée entre ledit élément de réaction (9) et ledit corps de support principal (6).

2. Dispositif (2) selon la revendication précédente, dans lequel chacun desdits éléments de déformation (39) se développe dans une direction de développement (S) des éléments de déformation (39) et ladite direction de développement (S) des éléments de déformation (39) est rectiligne.

3. Dispositif (2) selon la revendication 2, dans lequel ladite action de forçage de l'élément de réaction (9) contre ledit corps de support principal (6) est réalisée dans une direction de forçage (F) parallèle à ladite direction de développement (S) des éléments de déformation (39).

4. Dispositif (2) selon l'une quelconque des revendications 2 et 3, dans lequel lesdits éléments de déformation (39), transversalement à ladite direction de développement (S) des éléments de déformation (39), ont une section sensiblement triangulaire.

5. Dispositif (2) selon la revendication précédente, dans lequel ledit triangle comprend un côté de base (40) supporté par ledit élément de réaction (9) et deux côtés libres (41).

6. Dispositif (2) selon la revendication précédente, dans lequel ledit triangle comprend un bord libre en saillie (42), agencé entre lesdits côtés libres (41), qui forme une hauteur (H) dudit triangle avec ledit côté de base (40).

7. Dispositif (2) selon la revendication précédente, dans lequel ledit bord libre (42) a au moins un rayon de courbure (R) et ledit rayon de courbure (R) est sensiblement constant.

8. Dispositif (2) selon la revendication 7, dans lequel ledit rayon de courbure (R) du bord libre (42) est inférieur à ladite hauteur (H) du triangle.

9. Dispositif (2) selon l'une quelconque des revendications précédentes, dans lequel ledit élément de réaction (9) comprend une partie de montage (43) qui est apte à être emboîtée au sein d'un siège de verrouillage correspondant (44) défini par ladite partie de support (10) du corps de support principal (6) et ladite partie d'emboîtement (43) de l'élément de réaction (9) supporte lesdits éléments de déformation (39).

10. Dispositif (2) selon la revendication 9, dans lequel lesdits éléments de déformation (39) sont espacés le long du périmètre de ladite partie de montage (43).

11. Dispositif (2) selon la revendication 9 ou 10, dans lequel ladite partie de montage (43) a sensiblement la forme d'un cylindre, ledit cylindre s'étendant dans une direction de développement (I) de la partie de montage (43) et ladite direction de développement (I) de la partie de montage (43) est sensiblement parallèle auxdites directions de développement (S) des éléments de déformation (39).

12. Dispositif (2) selon la revendication 11, dans lequel lesdits éléments de déformation (39) se développent le long de longueurs des directions de développement (S) des éléments de déformation (39) ayant une extension moindre que l'extension de ladite partie de montage (43) dans ladite direction de développement (I) de la partie de montage (43).

13. Dispositif (2) selon l'une quelconque des revendications 9 à 12, dans lequel lesdits éléments de déformation (39) font saillie radialement depuis lesdites parties de montage (43).

14. Dispositif (2) selon l'une quelconque des revendications 9 à 13, dans lequel lesdits éléments de déformation (39) sont agencés sensiblement parallèlement les uns aux autres sur ladite partie de montage (43).

15. Dispositif (2) selon l'une quelconque des revendications 9 à 14, dans lequel lesdits éléments de déformation (39) sont agencés angulairement en étant sensiblement équidistants les uns des autres sur ladite partie de montage (43).

16. Dispositif (2) selon l'une quelconque des revendications 9 à 15, dans lequel ladite partie de montage (43) n'est pas pourvue d'éléments de déformation (39) à son extrémité (45) tournée vers ledit siège de verrouillage (44).

17. Dispositif (2) selon l'une quelconque des revendications 9 à 16, dans lequel ledit élément de réaction (9) comprend une partie de friction (46) apte à buter contre une partie de friction (47) correspondante dudit siège de verrouillage (44) du corps de support principal (6), de manière à contraindre les rotations relatives entre ledit élément de réaction (9) et ledit corps de support principal (6) par friction.

18. Dispositif (2) selon la revendication précédente, dans lequel lesdites parties de friction (46, 47) de l'élément de réaction (9) et du siège de verrouillage (44) sont sensiblement complémentaires l'une de l'autre.

19. Dispositif (2) selon la revendication 17 ou 18, dans lequel lesdites parties de friction (46, 47) de l'élément de réaction (9) et du siège de verrouillage (44) sont sensiblement en forme de cône tronqué.

20. Dispositif (2) selon l'une quelconque des revendications précédentes, dans lequel ledit élément de réaction (9) comprend une plaque de réaction (18) apte à coopérer avec lesdits moyens d'actionnement (8) et ladite plaque de réaction (18) comprend une surface de coopération (19) qui comprend un ou plusieurs sièges de roulement (20) qui sont aptes à loger, au moins en partie, des corps tournants (17) aptes à rouler au sein desdits sièges roulants (20), lesdits corps tournants (17) permettant ladite coopération entre l'élément de réaction (9) et lesdits moyens d'actionnement (8).

21. Dispositif (2) selon la revendication 20, dans lequel lesdits moyens d'actionnement (8) comprennent une plaque principale (15) apte à coopérer avec ladite plaque de réaction (18), ladite plaque principale (15) comprenant des sièges de roulement (16) correspondant auxdits sièges de roulement (20) de la plaque de réaction (18), lesdits sièges de roulement (16) de la plaque principale (15) étant aptes, au moins en partie, à loger et faire rouler les corps tournants (17) qui sont logés et tournent au sein desdits sièges de roulement (20) de la plaque de réaction (18), de manière à permettre ladite coopération entre ladite plaque de réaction (18) et ladite plaque principale (15).

22. Dispositif (2) selon la revendication précédente, dans lequel lesdits moyens d'actionnement (8) comprennent un arbre d'actionnement (14) associé à ladite plaque principale (15).

23. Dispositif (2) selon la revendication précédente, dans lequel ledit élément de réaction (9) définit une ouverture traversante (50) qui est apte, au moins en partie, à supporter ledit arbre d'actionnement (14).

24. Dispositif (2) selon l'une quelconque des revendications 20 à 23, dans lequel ladite plaque de réaction (18) forme des éléments en saillie (22) définissant des sièges de connexion (23) entre eux pour relier ledit élément de réaction (9) avec un dispositif de support (21) apte à supporter lesdits moyens de poussée (7).

25. Dispositif (2) selon l'une quelconque des revendications précédentes, dans lequel ledit élément de réaction (9) est fait d'acier fritté.

26. Dispositif (2) selon l'une quelconque des revendications 2 à 25, dans lequel la section d'extrémité des éléments de déformation (39), qui est destinée à tout d'abord entrer en interaction avec ladite partie de support (10) du corps de support principal (6) pour former lesdits sièges rétractés, est inclinée par rapport à un plan orthogonal à ladite direction de développement (S) des éléments de déformation (39).

27. Étrier de frein (1) comprenant un dispositif de stationnement (2) selon l'une quelconque des revendications précédentes, par exemple du type flottant

28. Frein à disque comprenant un étrier de frein (1) selon la revendication 27.
